# EUROPÄISCHE PATENTANMELDUNG

(11) **EP 2 502 695 A1**
(43) Veröffentlichungstag der Anmeldung: **26.09.2012**
(21) Anmeldenummer: 12155536.1
(22) Anmeldetag: 15.02.2012
(51) Int. Cl.: B23G 5/20

(54) **Gewindeschneidsystem**

(30) Priorität: 24.03.2011 DE 102011006015
(71) Anmelder: HILTI Aktiengesellschaft, 9494 Schaan (LI)
(72) Erfinder: Oberndorfer, Georg, 6800 Feldkirch (AT)

(57) **Zusammenfassung**

Ein Gewindeschneidsystem, insbesondere zum Schneiden von Gewinden in Betonbohrlöchern, umfasst einen Schneidwerkzeugsatz (12), der einen Bohrer (16) zum Erstellen eines Bohrlochs und einen den Bohrer (16) konzentrisch umgebenden, von diesem separaten, hülsenförmigen Gewindeschneider (18) enthält. Der Bohrer (16) steht axial gegenüber dem Gewindeschneider (18) vor.

## Beschreibung

Die Erfindung betrifft ein Gewindeschneidsystem, insbesondere zum Schneiden von Gewinden in Betonbohrlöchern.

Derartige Bohrlöcher dienen zum Aufnehmen von Schrauben, die zur Befestigung von Gegenständen im Untergrund verwendet werden.

Die gängige Technik zum Setzen von Betonschrauben besteht darin, ein Bohrloch ohne Gewinde zu erstellen und die Betonschraube in das Bohrloch einzuschrauben, wobei die Schraube sich das erforderliche Gegengewinde in der Wand des Bohrloches selber schneidet. Zum Setzen der Betonschraube wird beispielsweise ein Tangentialschlagschrauber verwendet, der die Antriebsenergie in zeitlich abgesetzten Pulsen in Tangentialrichtung auf die Betonschraube überträgt. Damit sich die Betonschraube in den Beton schneiden kann, müssen der Schaft und das Gewinde der Schraube eine sehr große Härte und Festigkeit aufweisen. Dies erschwert die Herstellung und erhöht die Fertigungskosten. Außerdem können sich Probleme ergeben, wenn bei der Bohrung ein Bewehrungseisen angebohrt wird und in der Folge die Betonschraube ein Gewinde in das Eisen schneiden muss, da dies zu einem Verschleiß des Gewindes der Betonschraube führen kann.

Diese Nachteile lassen sich vermeiden, wenn die Betonschraube in ein bereits vorgefertigtes Gewinde im Bohrloch eingeschraubt wird. Herkömmlich ist hierzu nach Erstellen des Bohrlochs ein separater Arbeitsgang zum Schneiden des Gewindes erforderlich, was ein separates Werkzeug erfordert und den Setzvorgang verzögert und somit verteuert.

Aufgabe der Erfindung ist es, das Setzen einer Schraube, insbesondere einer Betonschraube, sicher und einfach zu gestalten.

Dies wird mit einem Gewindeschneidsystem erreicht, das einen Schneidwerkzeugsatz aufweist, der einen Bohrer zum Erstellen eines Bohrlochs und einen den Bohrer konzentrisch umgebenden, von diesem separaten, hülsenförmigen Gewindeschneider umfasst, wobei der Bohrer axial gegenüber dem Gewindeschneider vorsteht. Mit diesem Gewindeschneidsystem wird in einem Arbeitsgang und gleichzeitig das Bohrloch erstellt und das Gewinde in die Wand des Bohrlochs geschnitten. Das Bohrloch wird durch den Bohrer, dessen Bohrspitze gegenüber dem Gewindeschneider vorsteht, erstellt. In die Wandung des so entstehenden Bohrlochs schneidet der Gewindeschneider dann das Gewinde. Die Schraube kann anschließend in das vorbereitete Bohrloch eingedreht werden, wobei das Gewinde der Schraube in das bereits vorgefertigte Gewinde eingreift und nicht zum Schneiden eines Gewindes in die Bohrlochwand eingesetzt wird. Da das Gewinde der Schraube nicht durch den Setzvorgang belastet wird, ist eine gleichbleibende Festigkeit und Tragfähigkeit der Schraube gewährleistet.

Vorzugsweise ist die axial aus dem Gewindeschneider herausragende Bohrspitze gegenüber dem angrenzenden Bohrerschaft radial verbreitert, um die Menge des vom Gewindeschneider abzutragenden Werkstoffs so gering wie möglich zu halten.

Die Bohrspitze hat vorzugsweise einen Durchmesser, der größer ist als der Innendurchmesser des Gewindeschneiders. Dies stellt sicher, dass nahezu die gesamte Arbeit zur Erstellung des Bohrlochs ausschließlich vom Bohrer übernommen wird.

Der maximale Durchmesser der Bohrspitze entspricht vorteilhaft in etwa einem Kerndurchmesser des Gewindeschneiders, sodass der Schaft des Gewindeschneiders an der Wandung des Bohrlochs anliegt und nur das Gewinde des Gewindeschneiders in die Wandung des Bohrlochs eindringt und das Gewinde schneidet. Vorzugsweise sind Bohrspitze und Gewindeschneider so angepasst, dass der Gewindeschneider quasi exakt in das Bohrloch, das vom Bohrer erstellt wird, passt und sein Schaft an der Wand des Bohrlochs anliegt.

In einer bevorzugten Ausführungsform der Erfindung umfasst das Gewindeschneidsystem auch eine Bohrmaschine zum Antrieb des Schneidwerkzeugsatzes.

Die Bohrmaschine umfasst vorzugsweise jeweils eine separate Werkzeugaufnahme für den Bohrer und den Gewindeschneider.

Bohrer und Gewindeschneider können voneinander separate, nicht miteinander verbundene Teile sein.

Mit einer separaten Werkzeugaufnahme für Bohrer und Gewindeschneider ist es möglich, den Bohrer lediglich axial sowie den Gewindeschneider lediglich in einer Rotationsbewegung anzutreiben.

Deshalb hat die Bohrmaschine vorzugsweise einen axialen Schlagantrieb für den Bohrer und/oder einen tangentialen Schlagantrieb für den Gewindeschneider. Durch die Trennung der Antriebe lässt sich das beste Bohr- bzw. Schneidergebnis erzielen.

Der Bohrer kann axial und/oder umfangsmäßig angetrieben werden, während der Gewindeschneider vorzugsweise nur umfangsmäßig angetrieben wird, was sich zum Gewindeschneiden bewährt hat.

Die Schlagantriebe können so gesteuert sein, dass die Schlagenergie zeitlich gestaffelt auf Bohrer (axialer Schlagantrieb) und Gewindeschneider (tangentialer Schlagantrieb) aufgebracht wird, also Bohrer und Gewindeschneider zeitlich versetzt ihre Schlagbewegung ausführen.

Es ist jedoch auch möglich, Bohrer und Gewindeschneider zeitgleich schlaggetrieben zu drehen.

Auch wenn die Erfindung im Zusammenhang mit Betonschrauben beschrieben ist, lässt sie sich doch ohne Weiteres auf sämtliche anderen Arten von Schrauben in beliebigen, mit einem Gewinde versehbaren Untergründen übertragen.

Die Erfindung wird nachfolgend anhand eines Ausführungsbeispiels und mit Bezug auf die beigefügten Zeichnungen näher beschrieben. In den Zeichnungen zeigen:
- Figur 1 eine schematische Ansicht eines erfindungsgemäßen Gewindeschneidsystems mit einem Werkzeugsatz und einer Bohrmaschine; und
- Figur 2 den Werkzeugsatz des Gewindeschneidsystems aus Figur 1.

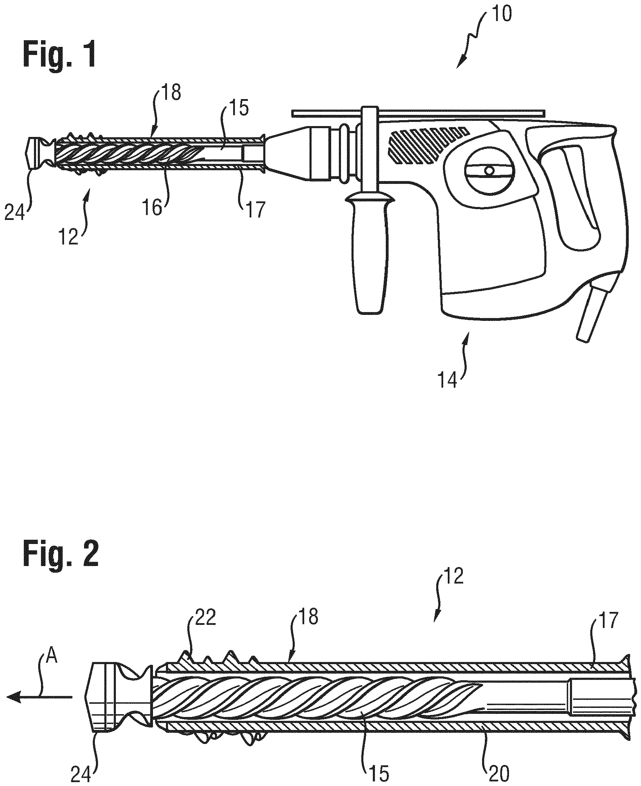

Figur 1 zeigt ein Gewindeschneidsystem 10 mit einem Schneidwerkzeugsatz 12 und einer Bohrmaschine 14. Die Bohrmaschine 14 ist ein elektrisch betriebenes Handgerät und verfügt über einen axialen Schlagantrieb, der mit einer ersten Werkzeugaufnahme in Verbindung steht, und einen tangentialen Schlagantrieb, der mit einer zweiten Werkzeugaufnahme in Verbindung steht. Die erste Werkzeugaufnahme ist zur Aufnahme eines Bohrerschafts 15 ausgebildet, während die zweite Werkzeugaufnahme konzentrisch um die erste Werkzeugaufnahme ausgebildet ist und zur Aufnahme eines hülsenförmigen Werkzeugendes 17 ausgebildet ist. Die Werkzeugaufnahmen sind hier nicht näher dargestellt.

Der Schneidwerkzeugsatz 12 weist einen Bohrer 16 mit Schaft 15 auf, der in der ersten Werkzeugaufnahme aufgenommen werden kann. Außerdem weist der Schneidwerkzeugsatz 12 einen Gewindeschneider 18 auf, der einen hülsenförmigen Schaft 20 mit dem Werkzeugende 17 sowie an einem in Axialrichtung A vorne liegenden Ende einige Windungen eines Schneidgewindes 22 besitzt. Der Gewindeschneider 18 umgibt den Bohrer 16 konzentrisch, wobei eine Bohrspitze 24 des Bohrers 16 axial über den Gewindeschneider 18 hervorsteht.

Der Durchmesser D der Bohrspitze 24 ist gegenüber dem Schaft 17 des Bohrers 16 verbreitert und ist so gewählt, dass er dem Außendurchmesser des Schafts 20 des Gewindeschneiders 18, das heißt dem Kerndurchmesser des Gewindeschneiders entspricht. In der radialen Ausdehnung des Schneidbereichs des Werkzeugsatzes 12 ragt lediglich das Gewinde 22 über den Schaft 20 des Gewindeschneiders 18 und die Bohrspitze 24 heraus.

Der Bohrer 16 und der Gewindeschneider 18 sind unabhängig voneinander antreibbar. Die beiden Bauteile sind nicht miteinander verbunden, wenn man über die Verbindung über die Werkzeugaufnahmen der Bohrmaschine 14 absieht. Die Bohrmaschine 14 treibt den Bohrer 16 in Drehrichtung und mit axialen Schlägen an, während der Gewindeschneider 18 mit rein tangentialen Schlägen drehangetrieben wird.

Es ist möglich, den Bohrer 16 ebenfalls tangential oder sowohl mit axialen als auch tangentialen Schlägen anzutreiben.

Die beiden Schlagantriebe der Bohrmaschine 14 sind so gesteuert, dass die Schlagenergie zeitlich gestaffelt an den Bohrer 16 und den Gewindeschneider 18 abgegeben wird, wobei diese vorzugsweise im Wechsel betrieben werden. Die Antriebe können aber auch so gesteuert sein, dass die Schlagenergie zeitgleich abgegeben wird.

Zum Erstellen eines Bohrlochs mit einem Gewinde, beispielsweise in Beton oder Stahlbeton, wird der Schneidwerkzeugsatz 12 so mit der Bohrmaschine 14 verbunden, dass der Bohrer 16 in der ersten Werkzeugaufnahme und der Gewindeschneider 18 in der zweiten Werkzeugaufnahme fixiert werden.

Die Bohrspitze 24 erzeugt ein Bohrloch mit einer glatten Wandung, dessen Durchmesser in etwa dem Außendurchmesser des zylindrischen Schafts 20 des Gewindeschneiders 18 entspricht. Der Gewindeschneider 18 hat keinen Anteil am Erstellen des Bohrlochs.

Mit weiterem Vordringen der Bohrspitze 24 in den Untergrund schneidet sich das Gewinde 22 des Gewindeschneiders 18 in die Wandung des Bohrlochs und formt so ein Gewinde.

Wenn die erwünschte Bohrlochtiefe erreicht ist, wird der Schneidwerkzeugsatz in umgekehrter Drehrichtung wieder aus dem Bohrloch entfernt.

Eine Schraube, beispielsweise eine Betonschraube, wird nach Anschluss der Bohrarbeiten und nach Entfernen des Schneidwerkzeugsatzes 12 in das Bohrloch eingebracht, indem sie in das vom Gewindeschneider 18 in die Wandung geschnittene Gewinde eingeschraubt wird.

## Patentansprüche

1. Gewindeschneidsystem, insbesondere zum Schneiden von Gewinden in Betonbohrlöchern, mit einem Schneidwerkzeugsatz (12), der einen Bohrer (16) zum Erstellen eines Bohrlochs und
einen den Bohrer (16) konzentrisch umgebenden, von diesem separaten, hülsenförmigen Gewindeschneider (18) umfasst,
wobei der Bohrer (16) axial gegenüber dem Gewindeschneider (18) vorsteht.

2. Gewindeschneidsystem nach Anspruch 1, **dadurch gekennzeichnet, dass** der Bohrer (16) eine axial aus dem Gewindeschneider (18) herausragende Bohrspitze (24) hat, die gegenüber dem angrenzenden Bohrerschaft (15) radial verbreitert ist.

3. Gewindeschneidsystem nach Anspruch 2, **dadurch gekennzeichnet, dass** die Bohrspitze (24) einen Durchmesser hat, der größer als der Innendurchmesser des Gewindeschneiders (18) ist.

4. Gewindeschneidsystem nach einem der vorhergehenden Ansprüche, **gekennzeichnet durch** eine Bohrmaschine (14) zum Antrieb des Schneidwerkzeugsatzes (12).

5. Gewindeschneidsystem nach Anspruch 4, **dadurch gekennzeichnet, dass** die Bohrmaschine (14) jeweils eine separate Werkzeugaufnahme für den Bohrer (16) und den Gewindeschneider (18) umfasst.

6. Gewindeschneidsystem nach einem der Ansprüche 4 und 5, **dadurch gekennzeichnet, dass** die Bohrmaschine (14) einen axialen Schlagantrieb für den Bohrer (16) und/oder einen tangentialen Schlagantrieb für den Gewindeschneider (18) hat.

7. Gewindeschneidsystem nach Anspruch 6, **dadurch gekennzeichnet, dass** die Schlagantriebe so gesteuert sind, dass die Schlagenergie zeitlich gestaffelt oder zeitgleich auf Bohrer (16) und Gewindeschneider (18) aufgebracht wird.

8. Gewindeschneidsystem nach einem der Ansprüche 4 bis 7, **dadurch gekennzeichnet, dass** die Bohrmaschine (14) und/oder der Schneidwerkzeugsatz (12) so ausgelegt sind, dass der Bohrer (16) axial und/oder umfangsmäßig angetrieben wird, während der Gewindeschneider (18) nur umfangsmäßig angetrieben wird.
